# EUROPÄISCHE PATENTANMELDUNG

(11) **EP 4 756 131 A1**
(43) Veröffentlichungstag der Anmeldung: **10.06.2026**
(21) Anmeldenummer: 25217909.8
(22) Anmeldetag: 24.11.2025
(51) Int. Cl.: E02F 9/08, B60K 11/06

(54) **ARBEITSMASCHINE**

(30) Priorität: 03.12.2024 DE 102024135944
(71) Anmelder: Liebherr-Werk Bischofshofen GmbH, 5500 Bischofshofen (AT)
(72) Erfinder: MEISSL, Johannes, 5505 Mühlbach am Hochkönig (AT); FUCHS, Lukas, 5621 St. Veit im Pongau (AT); KAINZ, Birgit, 3423 St. Andrä-Wördern (AT); KAINZ, Peter, 3423 St. Andrä-Wördern (AT)
(74) Vertreter: Lorenz Seidler Gossel Part. mbB

(57) **Zusammenfassung**

Die vorliegende Erfindung betrifft eine Arbeitsmaschine, insbesondere einen Radlader, mit einer Antriebseinheit, insbesondere Kolbenmotor oder Brennstoffzelle, die zum Antrieb der Arbeitsmaschine dient und die in einem Maschinenraum angeordnet ist, und einem Kühlaggregat, das ausgebildet und angeordnet ist, Wärme zumindest von der Antriebseinheit abzuführen, dadurch gekennzeichnet, dass das Kühlaggregat eine Lüfterbaugruppe umfasst, die eine Ansaug- und eine Ausblasrichtung der Luft aufweist, wobei die Lüfterbaugruppe zumindest bereichsweise oberhalb der Antriebseinheit angeordnet ist und ferner derart ausgebildet und angeordnet ist, dass die Ausblasrichtung nicht zur Antriebseinheit hin gewandt ist.

## Beschreibung

Die vorliegende Erfindung betrifft eine Arbeitsmaschine, insbesondere einen Radlader, mit einer Antriebseinheit, wie z.B. einem Kolbenmotor oder einer Brennstoffzelle, die zum Vortrieb der Arbeitsmaschine dient und die in einem Motorraum angeordnet ist, wobei ein Kühlaggregat vorgesehen ist, das ausgebildet und angeordnet ist, Wärme zumindest von der Antriebseinheit abzuführen.

Von der Erfindung sind somit Arbeitsmaschinen umfasst, die Wasserstoff unmittelbar als Kraftstoff in einem Verbrennungsmotor als Fahrmotor nutzen, als auch solche, bei denen der Wasserstoff zum Betrieb einer Brennstoffzelle verwendet wird, wobei die von der Brennstoffzelle erzeugte elektrische Leistung einem Elektromotor zugeführt wird, der als Fahrmotor dient.

Derartige Arbeitsmaschinen sind aus dem Stand der Technik bekannt.

Aus dem Stand der Technik sind des Weiteren Arbeitsmaschinen, wie Radlader bekannt, die Verbrennungsmotoren aufweisen, die mit fossilen Kraftstoffen betrieben werden. Die EP 0 533 118 A1 offenbart eine solche Arbeitsmaschine. Diese weist einen Fahrmotor auf, der mit einer Luftzuführungseinrichtung zur Motorkühlung ausgestattet ist. Die Luftzuführungseinrichtung umfasst einen Luftkanal und einen Lüfter, der im Betrieb eine Ausblasrichtung aufweist, die zu dem Motor hingerichtet ist, d.h. der Lüfter und die Luftführung sind so angeordnet, dass der Motor durch die Luftzuführungseinrichtung mit Luft beaufschlagt wird.

Ein Nachteil bei dieser bekannten Luftzuführungseinrichtung besteht darin, dass der Motor erheblichen Umwelteinflüssen ausgesetzt ist, da die diesem zugeführte Luft Verschmutzungen, wie Staub, Steine etc. enthalten kann. Dies kann ggf. zu einer Störung des Motorbetriebes und/oder von Kühlaggregaten führen.

Abgesehen davon besteht bei der aus der EP 0 533 118 A1 bekannten Anordnung ein Nachteil darin, dass keine thermische Trennung vorliegt, d.h. es kann nicht ausgeschlossen werden, dass der Lüfter den Motor mit warmer Luft anbläst, was dann der Fall ist, wenn an der Saugseite des Lüfters warme Luft vom Motor oder aus dem Motorraum anliegt. Dieser Fall kann beispielsweise dann eintreten, wenn eine Kurzschlussströmung von dem Motor zu der Saugseite des Lüfters vorliegt, was zur Folge hat, dass der Lüfter Warmluft zum Motor ausbläst.

Darüber hinaus gibt es bei der bekannten Ausgestaltung keinen definierten Volumenstrom, weil der Luftstrom über den Motor geführt ist wird eine größere Lüfterantriebsleistung benötigt.

Der vorliegenden Erfindung liegt die Aufgabe zugrunde, eine Arbeitsmaschine der eingangs genannten Art dahingehend weiterzubilden, dass die Motorkühlung derart ausgebildet ist, dass ein störungsfreier und effizienter Betrieb des Fahrmotors und der Motorkühlung der Arbeitsmaschine erfolgt und dass eine effiziente Ausnutzung des Bauraums erfolgt.

Diese Aufgabe wird durch eine Arbeitsmaschine mit den Merkmalen des Anspruchs 1 gelöst.

Danach ist vorgesehen, dass das Kühlaggregat eine Lüfterbaugruppe umfasst, die eine Ansaug- und eine Ausblasrichtung für Luft aufweist, wobei die Lüfterbaugruppe zumindest bereichsweise oberhalb der Antriebseinheit angeordnet ist und ferner derart ausgebildet und angeordnet ist, dass die Ausblasrichtung nicht zur Antriebseinheit hingewandt ist.

Durch diese Anordnung der Lüfterbaugruppe ist sichergestellt, dass der Motor bzw. die Antriebseinheit einerseits nicht mit verschmutzter Zuluft beaufschlagt wird, da die von der Lüfterbaugruppe ausgeblasene Luft nicht zu der Antriebseinheit hingeführt wird. Andererseits ist sichergestellt, dass eine thermische Trennung vorliegt. Denn selbst für den Fall, dass der Lüfterbaugruppe Warmluft zugeführt wird, wird diese nicht der Antriebseinheit bzw. dem Motor zugeführt, sondern in eine andere Richtung abgeführt.

Im Folgenden werden die Begriffe "Antriebseinheit" und "Motor" sowie "Fahrmotor" synonym verwendet. Jeder dieser Begriffe kann auch für jeden anderen der genannten Begriffe stehen.

Der Begriff "Antriebseinheit" und dessen synonym verwendete Begriffe kann auch Aggregate umfassen, die zum Betrieb der Antriebseinheit notwendig sind.

Durch die Anordnung der Lüfterbaugruppe oberhalb des Motors wird gegenüber Arbeitsmaschinen, bei denen die Lüfterbaugruppe und der Motor in Längsrichtung hintereinander angeordnet sind, eine kompakte Ausführung der Arbeitsmaschine erreicht, was deren Handling vereinfacht, da sie kürzer als bekannte Arbeitsmaschinen ausgebildet werden kann.

Der Begriff "oberhalb" kann sowohl bedeuten, dass die Lüfterbaugruppe über dem Motor angeordnet ist, d.h. auf einer gedachten vertikalen Linie über dem Motor, als auch generell, dass die Lüfterbaugruppe höher angeordnet ist, als der Motor, was auch einen Versatz von Motor und Lüfterbaugruppe in Längsrichtung der Arbeitsmaschine umfasst.

Vorzugsweise ist vorgesehen, dass sich die Lüfterbaugruppe bis zur Bauhöhe der Arbeitsmaschine, insbesondere bis zur Höhe der Fahrerkabine erstreckt.

Die Arbeitsmaschine kann eine Wasserstofftankanordnung mit wenigstens einem Wasserstofftank aufweisen, wobei in diesem Fall die Antriebseinheit mittels Wasserstoff betreibbar ist.

Vorzugsweise weist die Arbeitsmaschine eine oder mehrere Kameras oder Sensoren und ein oder mehrere Displays in der Fahrerkabine auf, die das von der oder den Kameras bzw. Sensoren erfasste Bild für den Bediener wiedergeben. Dies gilt vorzugsweise für den Bereich hinter der Fahrerkabine, d.h. den hinteren Bereich der Arbeitsmaschine. Vorzugsweise wird dieser von einer oder von mehreren Kameras und/oder Sensoren erfasst. Dies hat den Vorteil, dass der Fahrer ausgehend von seiner Arbeitsposition in der Fahrerkabine keine freie Sicht nach hinten benötigt.

So ist es möglich, die Lüfterbaugruppe oberhalb des Motors anzuordnen, d.h. einen vergleichsweise hohen Aufbau zu wählen, der zwar ggf. eine freie Sicht des Fahrers nach hinten nicht oder nicht vollständig ermöglicht, jedoch eine kompakte, d.h. kurze Bauweise der Arbeitsmaschine mit sich bringt, was beim Handling und beim Transport der Arbeitsmaschine erhebliche Vorteile hat.

Um den zur Verfügung stehenden Raum optimal zu nutzen, kann vorgesehen sein, dass die Lüfterbaugruppe bis zur Bauhöhe der Arbeitsmaschine reicht, d.h. beispielsweise sich bis zur Höhe der Fahrerkabine erstreckt.

Entsprechendes kann auch für die Wasserstofftankanordnung gelten. Auch diese kann ohne Rücksicht auf die freie Sicht des Fahrers z.B. bis zur Oberkante der Fahrerkabine angeordnet werden, sofern Mittel, wie Kameras bzw. Sensoren vorhanden sind, die dem Fahrer ein Bild von dem hinter der Arbeitsmaschine befindlichen Bereich geben.

Besonders vorteilhaft ist es, wenn die Lüfterbaugruppe derart angeordnet ist, dass die Ansaugrichtung der Lüfterbaugruppe nicht vom Fahrmotor bzw. von der Antriebseinheit zur Lüfterbaugruppe gerichtet ist. In diesem Fall wird wirksam verhindert, dass der Lüfter Warmluft von dem Motor ansaugt. Dies hat den Vorteil einer effizienten Kühlung bzw. ist Voraussetzung für diese.

Aus demselben Grund ist es vorteilhaft, wenn die Lüfterbaugruppe so ausgeführt ist, dass die von dem Lüfter ausgeblasene Luft nicht zur Ansaugseite der Lüfterbaugruppe gelangt, d.h. ein Kurzschluss vermieden wird. Dies wird vorzugsweise dadurch erreicht, dass der Winkel zwischen der Ausblasrichtung und der Ansaugrichtung 90 ° beträgt oder größer als 90 ° ist.

Die genannte Lüfterbaugruppe kann neben dem eigentlichen drehbar angeordneten Lüfterrad und dessen Antrieb, der vorzugsweise durch einen Elektromotor gebildet wird, einen oder mehrere der folgenden Bauteile aufweisen:
- einen oder mehrere Ansaugkanäle, durch die Luft zu dem Lüfter geführt bzw. von diesem angesogen wird,
- einen oder mehrere Ausblaskanäle, durch die die Luft von dem Lüfter abgegeben wird,
- ein Lüftergehäuse oder Lüfterrahmen, in dem der Lüfter aufgenommen ist.

Die genannten Ansaugkanäle und/oder Ausblaskanäle können integrale Bestandteile des Lüftergehäuses oder des Lüfterrahmens sein oder auch als gesonderte Bauteile ausgebildet sein.

In einer denkbaren Ausführungsform ist vorgesehen, dass die Lüfterbaugruppe derart ausgebildet und angeordnet ist, dass die Ansaug- und die Ausblasrichtung identisch sind oder parallel zueinander verlaufen. Denkbar ist beispielsweise eine Ausführungsform, bei der die Luft axial angesaugt und auch axial abgegeben wird.

Von der Erfindung ist auch eine andere Ausgestaltung der Lüfterbaugruppe umfasst. Diese kann beispielsweise derart ausgebildet und angeordnet sein, dass sich die Ansaug- und die Ausblasrichtung voneinander unterscheiden. Möglich wäre beispielsweise eine radiale Ansaugung und eine axiale Abgabe der Luft oder umgekehrt eine axiale Ansaugung der Luft, die dann radial abgegeben wird.

Auch denkbar ist es, dass die Ansaugrichtung und die Ausblasrichtung im Winkel zueinander verlaufen. Dieser Winkel beträgt vorzugsweise mindestens 90 °.

In einer Ausführungsform der Erfindung ist vorgesehen, dass die Arbeitsmaschine eine Längsrichtung aufweist, die der Fahrrichtung bei Geradeausfahrt entspricht und dass die Lüfterbaugruppe derart ausgebildet und angeordnet ist, die Ansaug- und/oder die Ausblasrichtung in einer von der Längsrichtung abweichenden Richtung verlaufen.

Denkbar ist es dabei, dass diese Richtung in einem Winkel von 90 ° ± Delta relativ zur Längsrichtung verläuft. In einer Ausführungsform, wenn Delta gleich Null ist, ist die Ansaugrichtung und/oder die Ausblasrichtung der Lüfteranordnung senkrecht, d.h. quer zur Fahrrichtung der Arbeitsmaschine.

Von der Erfindung ist auch ein von 90 ° abweichender Winkel umfasst, d.h. Delta kann einen Wert ungleich Null annehmen. So wäre z.B. eine Ansaugrichtung und/oder eine Ausblasrichtung im Winkel von z.B. 45 ° relativ zur Fahrtrichtung der Arbeitsmaschine denkbar.

In einer Ausführung verläuft die Ansaug- und/oder die Ausblasrichtung horizontal.

Von der Erfindung ist jedoch auch der Fall umfasst, die Ansaug- und/oder die Ausblasrichtung in einer zur Horizontalen geneigten Richtung verlaufen.

In einer Ausführungsform ist vorgesehen, dass die Arbeitsmaschine eine Längsrichtung aufweist, die der Fahrrichtung bei Geradeausfahrt entspricht und dass die Lüfterbaugruppe derart ausgebildet und angeordnet ist, die Ansaug- und/oder die Ausblasrichtung in Längsrichtung verlaufen.

Denkbar ist auch eine Ausführungsform, bei der die Ausblasrichtung vertikal nach oben gerichtet ist oder auch im Winkel relativ zur Vertikalen nach oben verläuft. Auch in diesem Fall gelangt die von der Lüfterbaugruppe ausgeblasene Luft nicht zu dem Fahrmotor der Arbeitsmaschine, da sich die Lüfterbaugruppe in einem Bereich oberhalb des Fahrmotors befindet.

Die Ausblasrichtung kann in Längsrichtung der Arbeitsmaschine verlaufen und die Ansaugrichtung in rechten Winkel dazu oder in einem spitzen Winkel dazu.

In einer weiteren Ausgestaltung der Erfindung ist vorgesehen, dass die Lüfterbaugruppe zumindest ein Lüfterrad und einen oder mehrere Ansaugkanäle und/oder Ausblaskanäle aufweist.

In einer bevorzugten Ausgestaltung der Erfindung ist vorgesehen, dass eine thermische Trenneinrichtung vorhanden ist, die zwischen der Ansaugseite und/oder der Ausblasseite der Lüfterbaugruppe und/oder der Antriebseinheit angeordnet ist. Dabei kann es sich um ein Blech oder dergleichen handeln, das sich zwischen dem Motorraum und der Lüfterbaugruppe befindet.

Dies ist jedoch kein zwingendes Merkmal der Erfindung, sondern optional. Eine thermische Trennung kann auch dadurch erreicht werden, dass die Lüfterbaugruppe so angeordnet und ausgebildet ist, dass ein Ansaugen von Warmluft vom Motor und ein Ansaugen der vom Lüfter ausgeblasenen Luft verhindert oder weitgehend verhindert wird. In diesem Fall wird keine Trenneinrichtung, wie z.B. ein Trennblech benötigt.

Durch die thermische Trennung der Ansaugseite und dem Motor bzw. der Ausblasseite wird verhindert, dass warme Luft von dem Motor oder von der Ausblasseite angesogen wird.

In einer Ausführungsform der Erfindung ist vorgesehen, dass die Arbeitsmaschine eine Fahrerkabine für den Maschinenführer aufweist und dass in Fahrtrichtung der Arbeitsmaschine hinter der Fahrerkabine die Wasserstofftankanordnung angeordnet ist. Vorzugsweise befindet sich die Wasserstofftankanordnung unmittelbar hinter der Fahrerkabine. Sie kann sich bis zur Höhe der Fahrerkabine erstrecken.

Weiterhin kann vorgesehen sein, dass in Fahrrichtung der Arbeitsmaschine hinter der Wasserstofftankanordnung die Lüfterbaugruppe angeordnet ist.

In dieser Ausführung sind somit von vorne nach hinten die Fahrerkabine, die Wasserstofftankanordnung und die Lüfterbaugruppe angeordnet, wobei sich vorzugsweise in vertikaler Richtung unterhalb der Lüfterbaugruppe der Motor der Arbeitsmaschine befindet.

Vorzugsweise ist vorgesehen, dass die Wasserstofftankanordnung nicht in vertikaler Linie oberhalb der Antriebseinheit angeordnet ist. Dies hat den Vorteil, dass eine etwaige Abwärme des Motors weder im Stand noch in der Fahrt der Arbeitsmaschine zu der Wasserstofftankanordnung gelangt.

Von der Erfindung ist jedoch auch der Fall umfasst, dass die Wasserstofftankanordnung vollständig oder teilweise über dem Motor angeordnet ist.

Grundsätzlich kann vorgesehen sein, dass die Wasserstofftankanordnung höher angeordnet ist als der Motor, denkbar ist jedoch auch eine Anordnung teilweise oder vollständig auf derselben Höhe.

In einer Ausführungsform ist vorgesehen, dass die Wasserstofftankanordnung in Fahrrichtung der Arbeitsmaschine gegenüber der Antriebseinheit nach vorne versetzt angeordnet ist.

Die Wasserstofftankanordnung kann sich auf derselben Höhe befinden wir die Lüfterbaugruppe.

Sie kann sich in einem Bereich befinden, der höher als der Motor angeordnet ist.

Vorzugsweise ist vorgesehen, dass die Wasserstofftankanordnung einen Rahmen aufweist, der mit einer oder mehreren Haltestreben versehen ist, um die Wasserstofftankanordnung sicher zu fixieren.

Denkbar ist es, dass sich die wenigstens eine Haltestrebe von der Lüfteranordnung zu dem Rahmen erstreckt, in dem sich ein oder mehrere Wasserstofftanks befinden.

Die Antriebseinheit der Arbeitsmaschine kann einen Motorkühler aufweisen, der beispielsweise als Öl-, Wasser- oder Luftkühler ausgeführt ist. Dieser Kühler befindet sich teilweise oder vollständig in dem von der Lüfterbaugruppe erzeugten Luftstrom.

Vorzugsweise handelt es sich bei der Arbeitsmaschine um eine Arbeitsmaschine mit einen Hinterwagen und einem Vorderwagen, die durch ein Knickgelenk gelenkig miteinander verbunden sind.

Die Antriebseinheit und die Lüfterbaugruppe sowie die Wasserstofftankanordnung befinden sich vorzugsweise an dem Hinterwagen der Arbeitsmaschine.

Die Ausblasrichtung kann beispielsweise zur Seite, nach hinten, nach vorne oder auch nach oben gerichtet sein.

An dieser Stelle wird darauf hingewiesen, dass die Begriffe "ein" und "eine" nicht zwingend auf genau eines der Elemente verweisen, wenngleich dies eine mögliche Ausführung darstellt, sondern auch eine Mehrzahl der Elemente bezeichnen können. Ebenso schließt die Verwendung des Plurals auch das Vorhandensein des fraglichen Elementes in der Einzahl ein und umgekehrt umfasst der Singular auch mehrere der fraglichen Elemente.

Weiterhin können alle hierin beschriebenen Merkmale der Erfindung beliebig miteinander kombiniert oder voneinander isoliert beansprucht werden.

Weitere Einzelheiten und Vorteile der Erfindung werden anhand eines in der Zeichnung dargestellten Ausführungsbeispiels näher erläutert.

Es zeigen:
- Figur 1:: eine schematische Seitenansicht des Hinterwagens der Arbeitsmaschine,
- Figur 2:: eine schematische Draufsicht auf die Anordnung gemäß Figur 1,
- Figur 3:: eine schematische Seitenansicht des Hinterwagens der Arbeitsmaschine in einer anderen Ausführungsform,
- Figur 4:: eine schematische Draufsicht auf die Anordnung gemäß Figur 3,
- Figur 5: eine perspektivische Ansicht der Haltevorrichtung für die Wasserstofftankanordnung und
- Figur 6:: schematische Ansichten von Richtungen der Ansaug- und der Ausblasrichtung der Lüfteranordnung.

In den Figuren sind dieselben oder funktionsgleiche Elemente mit denselben Bezugszeichen versehen.

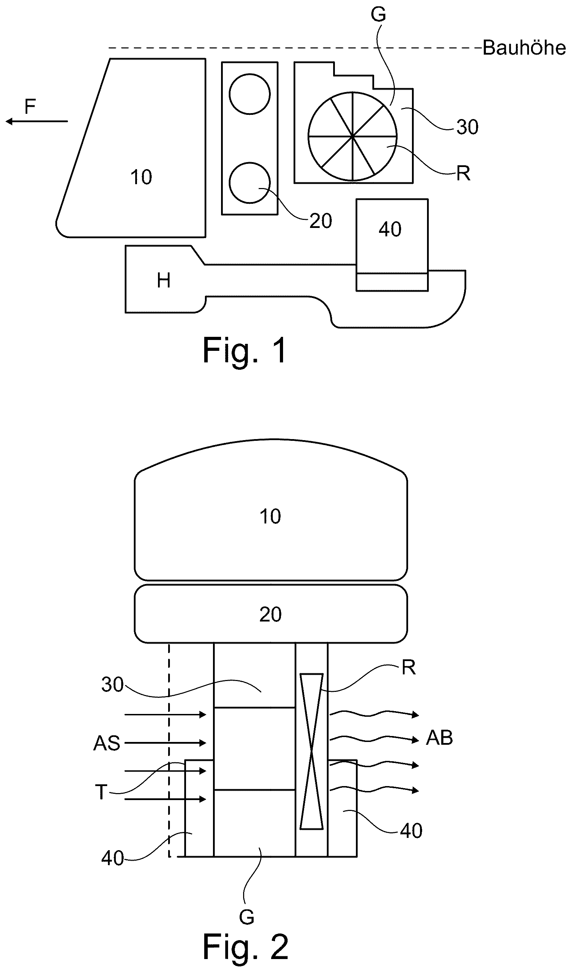

In Figur 1 ist mit dem Bezugszeichen H ein Grundkörper bzw. Rahmen des Hinterwagens eines Radladers gezeigt.

Dieser steht über ein Knickgelenk mit einem nicht dargestellten Vorderwagen gelenkig in Verbindung.

Der Hinterwagen H weist den Fahrmotor 40 auf, der beispielsweise mit gasförmigen Wasserstoff als Verbrennungsmotor betrieben wird. Er dient als Fahrmotor des Radladers. Alternativ ist es denkbar, dass der Radlader einen Brennstoffzellenantrieb aufweist oder einen Verbrennungsmotor für fossile Kraftstoffe, wie z.B. Dieselkraftstoff aufweist. Die Ausführungsbeispiele und die Erfindung insgesamt sind somit nicht auf einen Betrieb mit Wasserstoff beschränkt, sondern gelten analog auch für andere Antriebsarten und Kraftstoffe.

Mit 10 ist die Fahrerkabine bzw. deren Rahmen gezeigt.

Das Bezugszeichen F kennzeichnet die Fahrrichtung des Radladers bei Vorwärtsfahrt.

Unmittelbar hinter der Fahrerkabine 10 befindet sich die Wasserstofftankanordnung 20, die mehrere Wasserstofftanks sowie eine rahmenartige Haltevorrichtung umfasst, in der die Wasserstofftanks sicher aufgenommen sind. Von den Wasserstofftanks führen nicht gezeigte Leitungen zu dem Motor 40, um diesen mit Wasserstoff zu versorgen. Die Wasserstofftankanordnung 20 erstreckt sich bis zur Höhe der Fahrerkabine 10. Die Bauhöhe der Arbeitsmaschine wird durch die Oberkante der Fahrerkabine 10 definiert.

Unmittelbar über dem Motor 40 befindet sich die Lüfteranordnung 30.

Dies umfasst ein Gehäuse G, in dem drehbar ein Lüfterrad R angeordnet ist. Dieses wird von einem nicht gezeigten Elektromotor in eine Drehbewegung versetzt, wodurch eine Luftströmung erzeugt wird.

Wie aus Figur 1 ersichtlich, ist das Gehäuse G nach hinten stufenförmig abfallend ausgeführt. Dies hat den Vorteil, dass für den erfindungsgemäßen Radlader der Aufbau des Hinterwagens eines bekannten Radladers genutzt werden kann.

Aus Figur 1 ist weiter ersichtlich, dass sich die Lüfteranordnung 30 unmittelbar hinter der Wasserstofftankanordnung 20 befindet.

Weiter geht aus Figur 1 hervor, dass sich die Lüfteranordnung 20 wenigstens bereichsweise direkt oberhalb des Motors 40 befindet.

Die Wasserstofftankanordnung 20 ist gegenüber dem Motor 40 nach vorne, d.h. in Fahrtrichtung F versetzt angeordnet.

Figur 2 zeigt die Anordnung nach Figur 1 in einer Draufsicht.

Mit AS ist die Richtung der Luft gekennzeichnet, die durch den Lüfter R angesogen wird, und mit AB ist die Richtung der Luft gekennzeichnet, die von dem Ventiltor R abgegeben wird.

In dem hier gezeigten Ausführungsbeispiel liegen AS und AB auf einer Linie, die senkrecht zur Fahrtrichtung F verläuft.

Die Richtungen AS und AB verlaufen horizontal, können aber auch geneigt zur Horizontalen verlaufen.

Aus Figur 2 wird deutlich, dass die Ausblasrichtung AB nicht zu dem Motor 40 gerichtet ist, sondern zur Seite des Radladers verläuft.

Die Ansaugsichtung AS und die Ausblasrichtung AB verlaufen senkrecht zur Fahrtrichtung F.

Die gezeigte Ausführung hat den Vorteil, dass der Motor 40 bzw. dessen Kühlaggregate, wie Wärmetauscher, Kühler etc. nicht mit der vom Lüfter R abgegebenen Luft beaufschlagt wird.

Ein weiterer Vorteil besteht darin, dass es sich bei der Luft, die vom Lüfter angesogen wird, um Umgebungsluft und nicht um Motorabluft handelt. Die Zuluft zum Lüfter ist somit vergleichsweise kalt, so dass eine effektive Kühlung eines Kühlmediums, wie z.B. Öl oder Wasser erfolgt.

In Figur 2 ist mit dem Bezugszeichen ein Trennblech gezeigt, das die Ansaugseite des Lüfters von dem Motor thermisch trennt.

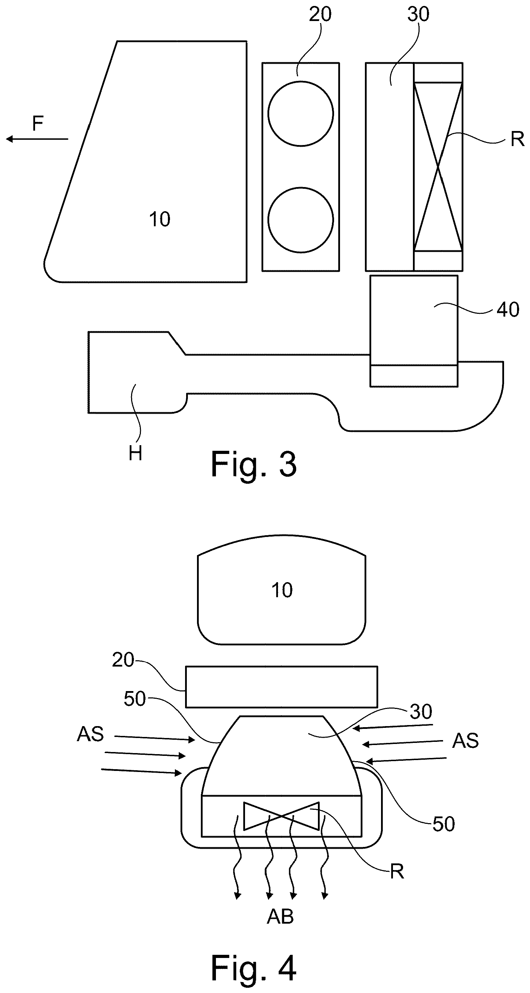

Figur 3 zeigt eine alternative Ausführungsform eines erfindungsgemäßen Radladers.

Auch in diesem Fall befindet sich die Lüfteranordnung 30 hinter der Wasserstofftankanordnung 20 und oberhalb des Motors 40, allerdings unterscheiden sich die Ansaug- und Ausblasrichtung AS und AB von der gemäß der Figuren 1 und 2.

In dem in Figur 3 und 4 gezeigten Fall wird die Luft nach hinten ausgegeben, d.h. entgegen der Fahrtrichtung F.

Anders als in der Ausführung der Figuren 1 und 2 verläuft die Ansaugrichtung AS im Winkel zur Ausblasrichtung AB. In Betracht kommt beispielsweise ein Winkel zwischen 45 ° und 90° zwischen AS und der Fahrtrichtung.

Wie dies weiter aus Figur 4hervorgeht und durch zwei Pfeile AS gekennzeichnet ist, wird die Luft beidseitig, d.h. von rechts und links angesogen. Die beiden Richtungen AS verlaufen im Winkel zur Ausblasrichtung AB. Die Richtung AS, in der die Luft angesogen wird, wird jeweils durch Ansaugkanäle 50 vorgegeben, die sich an dem Gehäuse G der Lüfteranordnung 30 befinden.

Auch in der Ausführungsform der Figur 3 und 4 wird die Luft von dem Lüfter R nicht in Richtung des Motors ausgeblasen, womit die eingangs beschriebenen Nachteile vermieden werden.

Auch die Zuluft gelangt nicht vom Motor zum Lüfter, sondern wie bei der Ausführung der Figuren 1 und 2 aus der Umgebungsatmosphäre.

Die Richtungen AB und AS können horizontal oder auch im Winkel zur Horizontalen verlaufen.

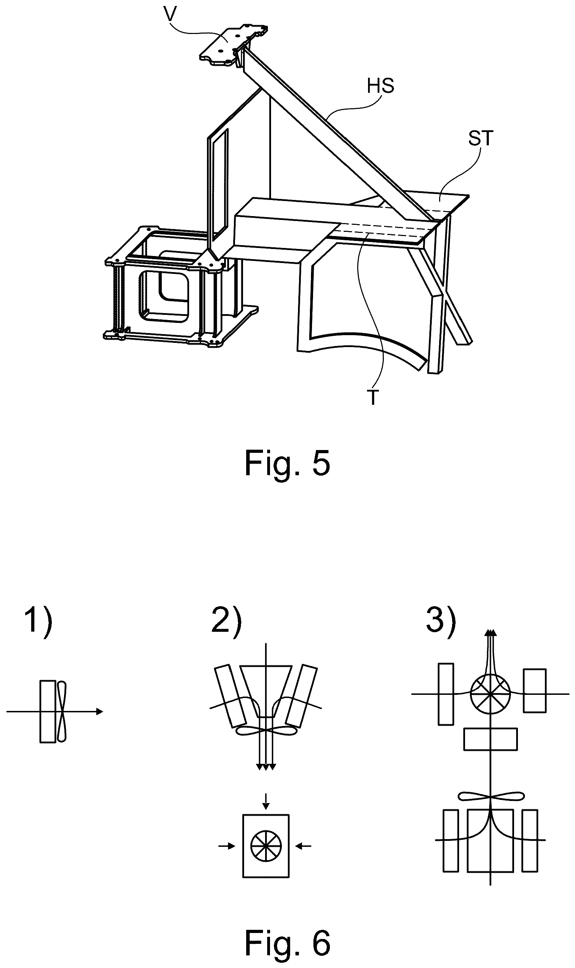

In Figur 5 ist mit T das optional vorhandene Trennblech zwischen Ansaugseite und Motor gezeigt und mit ST die Stellfläche für die Lüfteranordnung 30. Mit HS ist eine Haltestrebe gekennzeichnet, die sich von der Stellfläche ST bis zu einer Versteifung V erstreckt, die mit dem Rahmen der Wasserstofftankanordnung verschraubt oder anderweitig verbunden ist und diese stabilisiert und fixiert.

Figur 6 zeigt beispielhaft verschiedene denkbare Ansaug- und Ausblasrichtungen der Lüfteranordnung 30 einer erfindungsgemäßen Arbeitsmaschine.

In 1) verläuft die Ansaugrichtung in derselben Richtung wie die Ausblasrichtung, vorzugsweise jeweils im Winkel zur Fahrtrichtung, beispielsweise in rechten Winkel.

In 2) ist oben die Draufsicht und darunter die Ansicht von hinten in einer weiteren Ausführungsform gezeigt. In 2) ist die Ausblasrichtung in Fahrtrichtung und die Ansaugrichtungen im Winkel dazu sowie zusätzlich von oben. In dem Beispiel 2) ist der Lüfter unten an der schmaleren Seite des Gehäuses dargestellt. Von der Erfindung ist auch der Fall umfasst, dass der Lüfter an der oberen, breiten Seite des Gehäuses angeordnet ist.

In 3) ist oben die Draufsicht und darunter die Ansicht von hinten in einer weiteren Ausführung gezeigt. In 3) ist die Ausblasrichtung nach oben und die Ansaugrichtungen sind von der Seite und von hinten.

## Patentansprüche

1. Arbeitsmaschine, insbesondere Radlader, mit einer Antriebseinheit, insbesondere Kolbenmotor oder Brennstoffzelle, die zum Antrieb der Arbeitsmaschine dient und die in einem Maschinenraum angeordnet ist, und einem Kühlaggregat, das ausgebildet und angeordnet ist, Wärme zumindest von der Antriebseinheit abzuführen, **dadurch gekennzeichnet, dass** das Kühlaggregat eine Lüfterbaugruppe umfasst, die eine Ansaug- und eine Ausblasrichtung der Luft aufweist, wobei die Lüfterbaugruppe zumindest bereichsweise oberhalb der Antriebseinheit angeordnet ist und ferner derart ausgebildet und angeordnet ist, dass die Ausblasrichtung nicht zur Antriebseinheit hin gewandt ist.

2. Arbeitsmaschine nach Anspruch 1, **dadurch gekennzeichnet, dass** sich die Lüfterbaugruppe bis zur Bauhöhe der Arbeitsmaschine, insbesondere bis zur Höhe der Fahrerkabine erstreckt.

3. Arbeitsmaschine nach Anspruch 1 oder 2, **dadurch gekennzeichnet, dass** die Arbeitsmaschine eine Wasserstofftankanordnung mit wenigstens einem Wasserstofftank aufweist und wobei die Antriebseinheit mittels Wasserstoff betreibbar ist.

4. Arbeitsmaschine nach einem der vorhergehenden Ansprüche, **dadurch gekennzeichnet, dass** die Lüfterbaugruppe derart angeordnet ist, dass die Ansaugrichtung nicht von der Antriebseinheit zur Lüfterbaugruppe gerichtet ist.

5. Arbeitsmaschine nach einem der vorhergehenden Ansprüche, **dadurch gekennzeichnet, dass** die Lüfterbaugruppe derart ausgebildet und angeordnet ist, dass die Ansaug- und die Ausblasrichtung identisch sind oder parallel zueinander verlaufen.

6. Arbeitsmaschine nach einem der Ansprüche 1 bis 4, **dadurch gekennzeichnet, dass** die Lüfterbaugruppe derart ausgebildet und angeordnet ist, dass sich die Ansaug- und die Ausblasrichtung voneinander unterscheiden.

7. Arbeitsmaschine nach einem der vorhergehenden Ansprüche, **dadurch gekennzeichnet, dass** die Arbeitsmaschine eine Längsrichtung aufweist, die der Fahrrichtung bei Geradeausfahrt entspricht und dass die Lüfterbaugruppe derart ausgebildet und angeordnet ist, die Ansaug- und/oder die Ausblasrichtung in einer von der Längsrichtung abweichenden Richtung verlaufen.

8. Arbeitsmaschine nach Anspruch 7, **dadurch gekennzeichnet, dass** die Richtung in einem Winkel von 90 ° ± Delta relativ zur Längsrichtung verläuft.

9. Arbeitsmaschine nach einem der Ansprüche 1 bis 6, **dadurch gekennzeichnet, dass** die Arbeitsmaschine eine Längsrichtung aufweist, die der Fahrrichtung bei Geradeausfahrt entspricht und dass die Lüfterbaugruppe derart ausgebildet und angeordnet ist, die Ansaug- und/oder die Ausblasrichtung in Längsrichtung verlaufen.

10. Arbeitsmaschine nach Anspruch 9, **dadurch gekennzeichnet, dass** die Ausblasrichtung in Längsrichtung verläuft und dass die Ansaugrichtung in einem spitzen Winkel zur Fahrrichtung verläuft.

11. Arbeitsmaschine nach einem der vorhergehenden Ansprüche, **dadurch gekennzeichnet, dass** die Lüfterbaugruppe wenigstens ein Lüfterrad und einen oder mehrere Ansaugkanäle und/oder Ausblaskanäle aufweist.

12. Arbeitsmaschine nach einem der vorhergehenden Ansprüche, **dadurch gekennzeichnet, dass** eine thermische Trenneinrichtung vorhanden ist, die zwischen der Ansaugseite der Lüfterbaugruppe und der Antriebseinheit angeordnet ist.

13. Arbeitsmaschine nach einem der Ansprüche 3 bis 12, **dadurch gekennzeichnet, dass** die Arbeitsmaschine eine Fahrerkabine für den Maschinenführer aufweist und dass in Fahrtrichtung der Arbeitsmaschine hinter der Fahrerkabine die Wasserstofftankanordnung angeordnet ist.

14. Arbeitsmaschine nach Anspruch 13, **dadurch gekennzeichnet, dass** in Fahrrichtung der Arbeitsmaschine hinter der Wasserstofftankanordnung die Lüfterbaugruppe angeordnet ist, wobei vorzugsweise vorgesehen ist, dass die Wasserstofftankanordnung und die Lüfterbaugruppe höher angeordnet ist als die Antriebseinheit.

15. Arbeitsmaschine nach Anspruch 13 oder 14, **dadurch gekennzeichnet, dass** die Wasserstofftankanordnung in Fahrrichtung der Arbeitsmaschine gegenüber dem Fahrmotor nach vorne versetzt angeordnet ist und/oder **dadurch gekennzeichnet, dass** die Wasserstofftankanordnung einen Rahmen aufweist, der mit einer oder mehreren Haltestreben versehen ist, wobei vorzugsweise vorgesehen ist, dass sich wenigstens eine Haltestrebe von der Lüfteranordnung zu dem Rahmen erstreckt.
